# EUROPÄISCHE PATENTSCHRIFT

(11) **EP 2 351 001 B1**
(45) Veröffentlichungstag und Bekanntmachung des Hinweises auf die Patenterteilung: **22.05.2019**
(21) Anmeldenummer: 09778853.3
(22) Anmeldetag: 06.10.2009
(51) Int. Cl.: G09B 9/12, G09B 9/02

(54) **BEWEGUNGS- UND ORIENTIERUNGSSIMULATOR**
MOTION AND ORIENTATION SIMULATOR
SIMULATEUR DE MOUVEMENT ET D'ORIENTATION

(30) Priorität: 09.10.2008 AT 15832008
(43) Veröffentlichungstag der Anmeldung: 03.08.2011
(73) Patentinhaber: AMST-Systemtechnik GmbH, 5282 Ranshofen (AT)
(72) Erfinder: MAYRHOFER, Michael, A-5274 Burgkirchen (AT)
(74) Vertreter: Puchberger & Partner Patentanwälte
(86) Internationale Anmeldenummer: PCT/EP2009/007174
(87) Internationale Veröffentlichungsnummer: WO 2010/040505

(56) Entgegenhaltungen:
- US-A- 3 196 557
- US-A- 4 710 128
- US-A1- 2003 219 701
- MANFRED ROZAT ET AL.: "Performance Testing of the Desdemona Motion System"[Online] August 2007 (2007-08), Seiten 1-14, XP002564704 AIAA Modeling and Simulation Technologies Conference and Exhibit, 20-23 August 2007, Hilton Head, South Carolina Gefunden im Internet: URL:http://www.amst.co.at/downloads/r_d_pu blications/AIAA-2007-6472-793.pdf> [gefunden am 2010-01-22]
- M.J.M. LÖRTZER: "Movement simulator Desdemona launched" INTERNET ARTICLE, [Online] 24. Januar 2008 (2008-01-24), Seiten 1-1, XP002564705 Gefunden im Internet: URL:http://www.tno.nl/content.cfm?context= fascinatie_markten&content=markt_nieuwsber icht&laag1=194&item_id=2008-01-24%2017:17: 47.0&Taal=2> [gefunden am 2010-01-22]
- DE VOLKSKRANT: "Voelen wat een F-16 piloot voelt" INTERNET VIDEO, [Online] 25. Januar 2008 (2008-01-25), Seiten 1-1, XP002564706 You Tube Gefunden im Internet: URL:http://www.youtube.com/watch?v=5gLwSfX T-PE> [gefunden am 2010-01-20]
- "Voelen wat een F-16 piloot voelt .", , 31 January 2013 (2013-01-31), pages 1-4, XP055051852, Retrieved from the Internet: URL:http://www.youtube.com/watch?v=5gLwSfX T-PE [retrieved on 2013-01-31]
- Wim Bles: "KORT NIEUWS", , 31 August 2008 (2008-08-31), pages 1-2, XP055306201, Retrieved from the Internet: URL:http://publications.tno.nl/publication /34606640/jjbQDM/bles-2008-officiele.pdf [retrieved on 2016-09-28]

## Beschreibung

Die Erfindung betrifft einen Bewegungs- und Orientierungssimulator mit einer kardanischen Aufhängung für eine Kabine, die in einem Heave-Schlitten angeordnet ist, der in einem Schlittenkorb linear bewegbar ist.

Derartige Simulatoren werden zur Ausbildung und zum Sicherheitstraining von Piloten verwendet. Ziel solcher Simulatoren ist es, Flugzustände möglichst wirklichkeitsnah zu simulieren, wie sie auch in Extremfällen im Flugbetrieb vorkommen können, wie z.B. bei Hubschraubern und Flugzeugen im Kampfeinsatz. Ein Beispiel für Simulatoren beschreibt die US 2004/0197742 A1.

Die Internetpublikationen http://www.amst.co.at/downloads/r_d_publications/AIAA-2007-6472-793.pdf "Performance Testing of the Desdemona Motion System", http://www.tno.nl/content.cfm?context=fascinatie_markten&content=markt_nieuwsberic ht&laag1=194&item_id=2008-01-24%2017:17:47.0&Taal=2 "Movement simulator Desdemona launched", http://www.youtube.com/watch?v=5gLwSfXT-PE "Voelen wat een F-16 piloot voelt", http://www.youtube.com/watch?v=5gLwSfXT-PE "Voelen wat een F-16 piloot voelt " und http://publications.tno.nl/publication/34606640/jjbQDM/bles-2008-officiele.pdf "KORT NIEUWS" offenbaren prinzipielle kinematische Rahmenbedingungen eines gattungsgemäßen Simulators, jedoch keine ausführbar offenbarten Details zum Betrieb und insbesondere zum Antrieb eines derartigen Simulators. Die Dokumente US 4,710,128 A, US 3,196,557 A und US 2003/219701 A1 zeigen Vorrichtungen, die von ihrem Aufbau grundsätzlich von dem Aufbau des erfindungsgemäßen Simulators abweichen.

Ein Problem bei derartigen Simulatoren besteht darin, dass relativ große Massen stufenlos beschleunigt, abgebremst, gedreht oder anderwärtig bewegt werden müssen, sodass an die Antriebstechnik und die Statik der einzelnen Bauteile hohe Anforderungen zu stellen sind.

Aufgabe der vorliegenden Erfindung ist es, einen solchen Simulator vorzusehen, der alle denkbaren Bewegungs- und Orientierungszustände simulieren kann und dabei funktionssicher ist, kompakte Abmessungen besitzt und mit vertretbaren Kosten herstellbar ist.

Bei der vorliegenden Erfindung des eingangs erwähnten Bewegungs- und Orientierungssimulator mit einer kardanischen Aufhängung für eine Kabine, die in einem Heave-Schlitten angeordnet ist, der in einem Schlittenkorb linear bewegbar ist, wobei der Schlittenkorb drehbar ist und wobei zur Linearbewegung des Heave-Schlittens im Schlittenkorb ein Seilantrieb vorgesehen ist, wird die Aufgabe dadurch gelöst, dass der Simulator auf einem bodenfesten Fundament angeordnet ist, das in sich eine Antriebseinheit beherbergt, wobei die Antriebseinheit den Schlittenkorb in Drehung versetzen kann, und wobei die Antriebseinheit Motoren umfasst, dass der Seilantrieb ein am Schlittenkorb befestigtes stehendes Seil aufweist, dass der Seilantrieb um eine am Schlittenkorb gelagerte vordere und hintere Umlenkscheibenanordnung, um eine am Heave-Schlitten gelagerte Heave-Scheibenanordnung sowie um eine Seilantriebsscheibe geführt ist, wobei der Seilantrieb Motoren umfasst, dass zum Antrieb der Seilantriebsscheibe die Motoren und Kupplungselemente zur Übertagung der Kräfte vorgesehen sind, und dass die Motoren zum Antrieb des Schlittenkorbes und die Motoren zur Bewegung des Heave-Schlittens in Bezug zum Fundament ortsfest angeordnet sind.

Insbesondere ist vorgesehen, dass am Heave-Schlitten drehbare Heave-Scheibenanordnungen zur Verschiebung des Heave-Schlittens vorgesehen sind, und der Seilantrieb am Heave-Schlitten angreifende Seilabschnitte aufweist, über die Verschiebekräfte auf den Heave-Schlitten übertragbar sind, wobei die Seilabschnitte in bevorzugter Weise als, um die Heave-Scheibenanordnungen gelegte Seilschlingen ausgeführt sind.

Desweiteren sind die am Heave-Schlitten angreifenden Seilabschnitte paarweise gegeneinander wirkend angeordnet und die zur Verschiebung des Heave-Schlittens gegeneinander wirkendenden Paare von Seilabschnitten sind über eine Spannanordnung gegeneinander vorgespannt. Zusätzlich ist die Erfindung dadurch gekennzeichnet, dass die Summe der Abstände zwischen den paarweise am Heave-Schlitten angreifenden Seilabschnitten und den zugehörigen, in Seilrichtung am nächsten liegenden Umlenkscheiben bei einer Verschiebung des Heave-Schlittens konstant ist, dass der Schlittenkorb drehbar gelagert ist und beidseitig der Drehachse auskragt und dass der Heave-Schlitten auf beide Seiten der Drehachse des auskragenden Schlittenkorbes bewegbar ist, dass der Seilantrieb Seile aufweist die mit einer Spannanordnung auf Zug gehalten sind, und dass zum Antrieb der Drehung des Schlittenkorbs Motoren und Kupplungselemente zur Übertagung der Kräfte vorgesehen sind, wobei die Kupplungselemente in bevorzugter Weise als Reibringe ausgeführt sind. Weiters ist erfindungsgemäß vorgesehen, dass zum Antrieb der Seilantriebsscheibe Motoren und Kupplungselemente zur Übertagung der Kräfte vorgesehen sind, wobei die Kupplungselemente in bevorzugter Weise als Reibringe ausgeführt sind, dass das Seil zusätzlich noch um eine am Schlittenkorb angeordnete Spannscheibe geführt ist und dass die vordere und hintere Umlenkscheibenanordnung je zwei Umlenkscheiben umfassen. Weitere Vorteilhafte Merkmale sind, dass die Heave-Scheibenanordnung vier Heave-Scheiben aufweist, die voneinander unabhängig am Schlitten drehbar angeordnet sind, dass je zwei Heave-Scheiben an einem Heave-Bolzen gelagert sind, dass die beiden von der Seilantriebsscheibe abgehenden Seilabschnitte über eine vordere und eine hintere Umlenkscheibe und von dort auf je eine der Heave-Scheiben geführt sind, dass die Spannscheibe eine fünfte Umlenkscheibe bildet und, dass der eine Befestigungspunkt des Endes des Seiles am vorderen Ende und der andere Befestigungspunkt am hinteren Ende des Schlittenkorbes angeordnet ist.

Der erfindungsgemäße Simulator zeichnet sich auch dadurch aus, dass der Schlittenkorb als drehbar gelagerter, zweiseitiger Zentrifugenarm ausgebildet und durch eine Antriebseinheit in Drehung versetzbar ist, dass die am Schlitten angeordnete kardanische Aufhängung mit der darin aufgehängten Kabine durch einen Vertikallift vertikal bewegbar ist und dass die Längen des von der Umlenkscheibe zur Seilantriebsscheibe reichenden Seilabschnittes V und des von der Seilantriebsscheibe zur Spannscheibe reichenden Seilabschnittes VI und von der Spannscheibe zur Umlenkscheibe reichenden Seilabschnittes VII unveränderlich vorgesehen sind.

Schließlich ist der Simulator auch dadurch gekennzeichnet, dass bei einer Drehung der Antriebsscheibe die Seilabschnitte I, II, III und IV je nach Drehrichtung eine Verkürzung oder Verlängerung und die Seilabschnitte VIII, IX, X und XI eine Verlängerung oder Verkürzung erfahren, wodurch die lineare Verschiebung des Heave-Schlittens erfolgt, wobei die Seilabschnitte I bis XI in drei übereinander angeordneten Ebenen E1 bis E 3 angeordnet sind, wobei zum Wechseln der Ebene die Heave-Scheibenanordnungen und zwei der Umlenkscheiben schräggestellt sind, dass die Seilabschnitte II und X in der obersten Ebene E1, die Seilabschnitte I, IX, III, XI in der mittleren Ebene E2 und die Seilabschnitte VIII, VII/VI, V und IV in der untersten Ebene E3 angeordnet sind, wobei die Seilabschnitte I und XI in den Befestigungspunkten P1 und P2 enden und dass bei Drehung der Antriebsscheibe die Heave-Scheiben eine Drehung in die entgegengesetzte Richtung zu den, der Richtung der Antriebsscheibe folgenden, Heave-Scheiben aufweisen.

Weitere vorteilhafte Merkmale sind den Patentansprüchen und der nachfolgenden Beschreibung sowie den Zeichnungen zu entnehmen.

Nachfolgend wird die Erfindung anhand eines Ausführungsbeispieles beschrieben. Figur 1 ist die Schrägansicht des erfindungsgemäßen Bewegungs- und Orientierungssimulators. Die Figuren 2 und 3 sind Schnitte durch den Simulator gemäß den einander zugeordneten Schnittlinien. Figur 4 ist eine Aufsicht auf den Simulator. Die Figur 5 zeigt einen Schnitt durch den Seilantrieb. Figur 6 zeigt schematisch die Seilführung mit den Umlenkscheiben und Heave-Scheiben und Figur 7 die Zuordnung der Seilabschnitte zu einzelnen Ebenen mit den zugeordneten Scheiben.

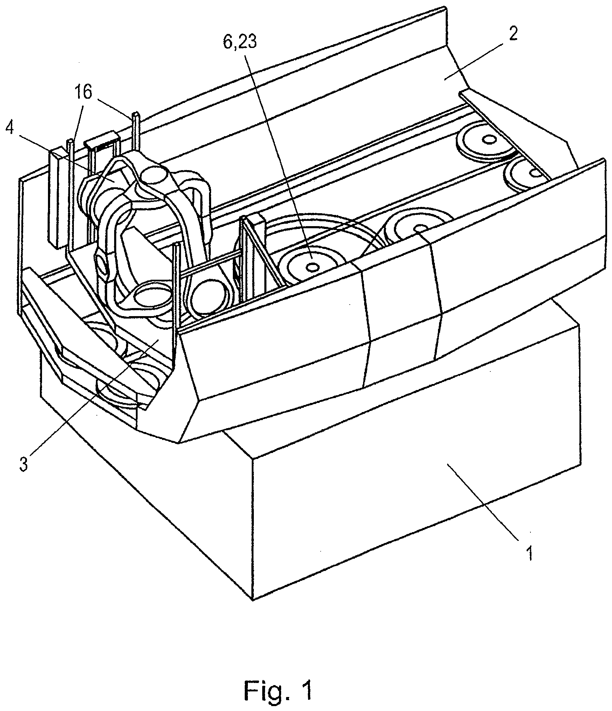

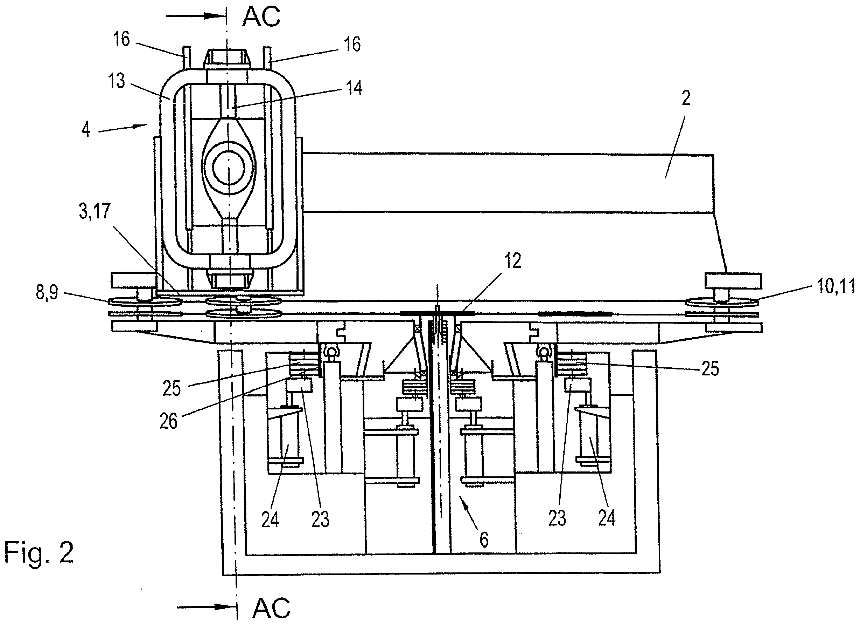

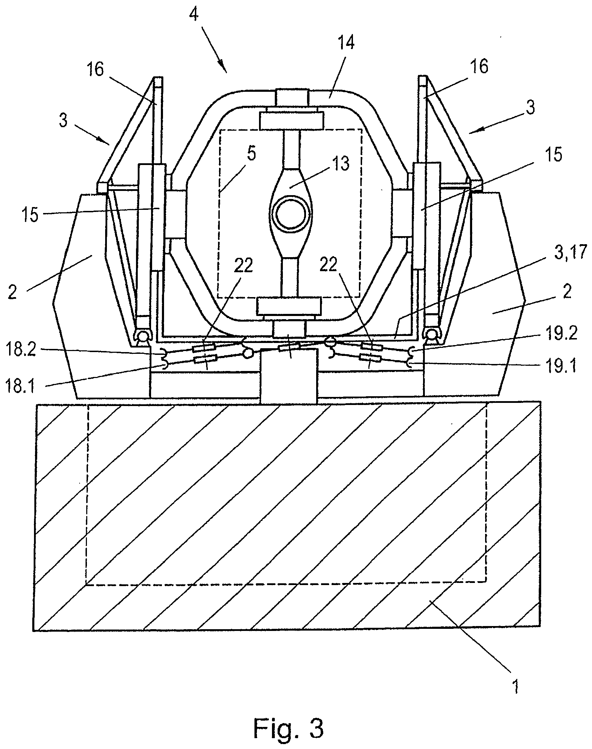

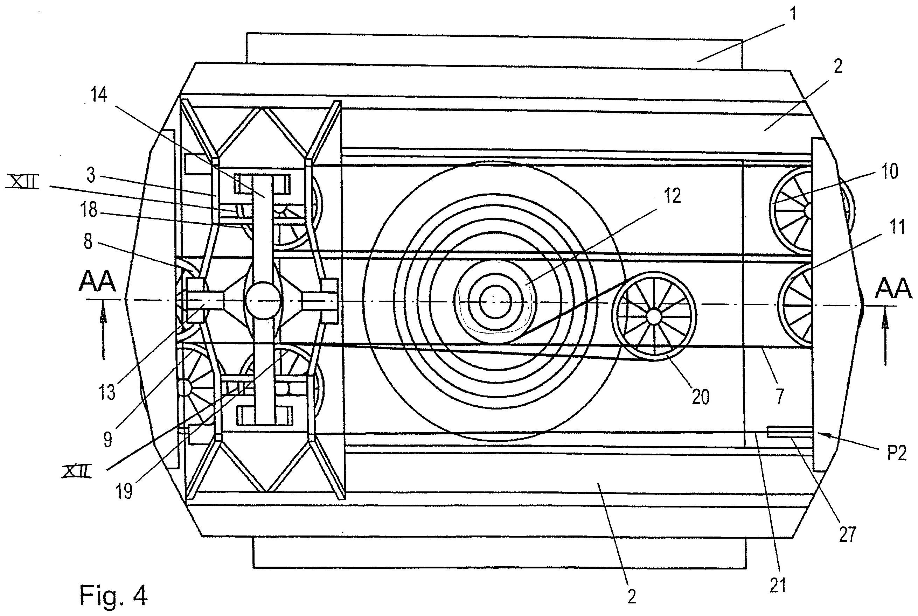

Gemäß Figur 1 ist der Simulator auf einem bodenfesten Fundament 1 angeordnet, der in sich die Antriebseinheit beherbergt, die einen Schlittenkorb 2 in Drehung versetzen kann. Der Schlittenkorb ist verwindungssteif ausgeführt und kann hohe Kräfte aufnehmen. Die Wirkung des Schlittenkorbs ist jene eines zweiseitigen Zentrifugalarmes herkömmlicher Zentrifugen, wobei entlang des Schlittenkorbs ein Heave-Schlitten 3 verschiebbar ist, der eine kardanische Aufhängung 4 trägt. Im Zentrum der kardanischen Aufhängung 4 ist die Kabine 5 angeordnet, in der üblicherweise eine oder maximal zwei Testpersonen sitzen können. Diese Kabine 5 ist nur in Figur 3 strichpunktiert angedeutet. Die Kabine 5 kann z.B. eine Flugzeugkabine mit den entsprechenden audiovisuellen Einrichtungen, aber auch der Steuerbereich eines anderen Fahrzeuges, wie z.B. ein PKW sein. Der Heave-Schlitten 3 mit darauf befindlicher kardanischer Aufhängung kann entlang des Schlittenkorbs zwischen zwei Endstellungen bewegt werden. In Figur 1 befindet sich der Schlitten in der linken Endstellung, die nachstehend als vordere Stellung bezeichnet wird. Wenn der Schlitten in die rechte Endstellung bewegt wird, befindet er sich in der hinteren Stellung, wobei die Bezeichnungen vordere und hintere nur zum Zweck der Unterscheidungsmöglichkeit willkürlich definiert sind. Die Figur 2 zeigt einen Längsschnitt nach der Linie AA-AA in Figur 4, wobei der Schnitt auch durch das Fundament 1 und die Antriebseinheit 23 für den Schlittenkorb 2 und den Seilantrieb 6 geht. An den beiden Enden des Bodenbereiches des Schlittenkorbs 2 befinden sich Umlenkräder, nämlich je zwei Umlenkräder für das Antriebsseil 7 für die Schlittenbewegung. Die vorderen Umlenkscheiben 8, 9 sind drehbar am vorderen Ende des Schlittenkorbs und die hinteren Umlenkscheiben 10, 11 sind am hinteren Ende des Schlittenkorbs drehbar angeordnet.

Für den Antrieb dienen im wesentlichen zwei Antriebseinheiten, nämlich eine Antriebseinheit 23 für die Rotation des Schlittenkorbs und ein Seilantrieb 6 zur horizontalen Bewegung des Heave-Schlittens 3 entlang des Schlittenkorbes.

Die kardanische Aufhängung 4 umfasst in bekannter Weise zwei Kardanbögen, nämlich den Yaw-Ring 13, und den Roll-Ring 14, deren Stellung zueinander beliebig einstellbar und verdrehbar ist. Überdies ist die gesamte kardanische Aufhängung an einem Vertikallift 15 drehbar angeordnet, wodurch die in der kardanischen Aufhängung befindliche Kabine auch noch mit einer Bewegungskomponente in vertikaler Richtung beaufschlagt werden kann.

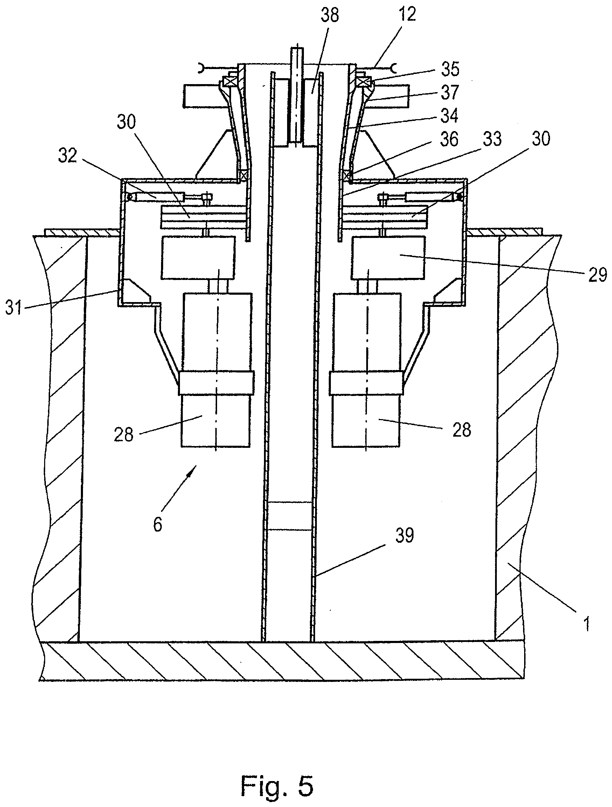

Die Antriebseinheit 23 für den Schlittenkorb umfasst mehrere - zum Beispiel acht - Motoren 24, die über Reibringe 25 den Abtriebsring 26 in Drehung versetzen können. Die Beschreibung zum Seilantrieb 6 folgt weiter unten zu Figur 5.

Der Schnitt in der Darstellung der Figur 3 verläuft nach der Linie AC - AC in Figur 2 und verdeutlicht den konstruktiven Aufbau des Simulators. Wie zu erkennen ist, ist der Schlittenkorb 2 wannenförmig ausgebildet und der Heave-Schlitten 3 ist auf Schienen des Schlittenkorbs geführt. An den beiden Seiten des Heave-Schlittens 3 sind vertikale Liftschienen 16 angeordnet, auf denen der Vertikallift 15 mit der kardanischen Aufhängung 4 und Kabine 5 vertikal bewegt werden kann. Im Boden 17 des Schlittens 3 sind zwei Heave-Scheibenanordnungen 18, 19 vorgesehen, wobei je zwei Heave-Scheiben 18.1 und 18.2 sowie 19.1 und 19.2 jeweils auf einen gemeinsamen Heave-Bolzen 22 drehbar angeordnet sind.

Die Figur 4 zeigt die Aufsicht auf den Simulator, wobei der Heave-Schlitten 3 in linker, also vorderer Stellung eingezeichnet ist. Erkennbar ist die zentrale Seilantriebsscheibe 12, durch die der Schlitten 3 innerhalb des Schlittenkorbs linear bewegt werden kann. Die beiden vorderen Umlenkscheiben 8, 9 und die hinteren Umlenkscheiben 10, 11 für das Umlenken des Seiles 7 sind, wie schon oben gesagt, am Schlittenkorb 2 drehbar befestigt. Die Heave-Scheibenanordnungen 18, 19 sind drehbar und zwar unabhängig voneinander drehbar am Schlitten 3 befestigt. Weiters erkennt man noch eine Spannscheibe 20, die für das Seil 7 auch als Umlenkscheibe wirkt und die dazu dient, das Seil 7 in festgespanntem Zustand zu halten. Die beiden Enden 21 des Seiles 7 sind fest mit dem Schlittenkorb befestigt und zwar an den jeweils entgegengesetzten Enden des Schlittenkorbs. In Figur 4 ist eines der Seilenden mit der Seilfixierung 27 am Befestigungspunkt P2 erkennbar. Das andere Seilende und dessen Befestigungspunkt P1 ist vom Schlitten 3 verdeckt.

Anhand der Figur 5 wird der Seilantrieb 6 etwas näher beschrieben.
Es sind - hier fünf Stück - Motoren 28 mit Getriebe 29 und je drei Reibringen 30 an einer Motorkonsole 31 befestigt. Die Motorkonsolen sind drehbar aufgehängt und können mittels Pneumatik-Zylinder 32 die Reibringe 30 an den Abtriebsring 33 anpressen. Der Abtriebsring 33 ist unten an der Hohlwelle 34 befestigt und diese überträgt die Rotation auf die Seilantriebsscheibe 12. Die Hohlwelle 34 ist im Seilantriebsgehäuse 37 mittels "Lager oben" 35 und "Lager unten" 36 gelagert. Außerdem ist in Figur 5 ein Schleifring 38 und ein Schleifring-Halter 39 eingezeichnet. Da die ganze Elektronik durch die Hohlwelle und über Schleifringe geführt werden muss, ist der Seilantriebsstrang mit einer hohlen Welle versehen worden.

Für die Bewegung des Heave-Schlittens 3 im Schlittenkorb 2 dient jedenfalls die motorbetriebene Seilantriebsscheibe 12 mit der Seilführung für das Seil 7.

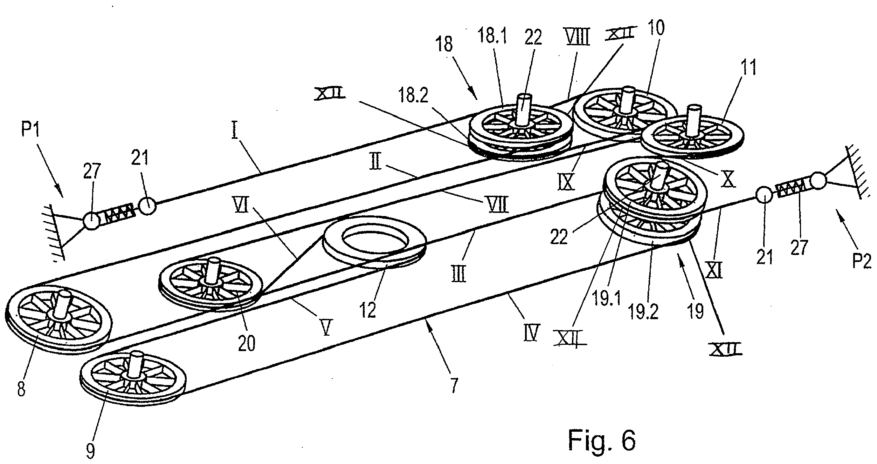

Die Figur 6 zeigt schematisch die Führung des Seiles 7 zwischen den beiden Befestigungspunkten P1 und P2, den vorderen Umlenkscheiben 8, 9, den hinteren Umlenkscheiben 10, 11, der Antriebsscheibe 12 und Spannscheibe 20, die alle drehbar am Schlittenkorb angeordnet sind, und den beiden Heave-Scheibenanordnungen 18, 19, die am Schlitten drehbar angeordnet sind und diesen linear bewegen können.

Die Heave-Scheibenanordnungen 18, 19 befinden sich in der dargestellten Lage in hinterer Endstellung. Um die Heave-Scheibenanordnungen und mit ihnen den Schlitten nach links in die vordere Lage zu bewegen, muss die Antriebsscheibe 12 entgegen den Uhrzeigersinn gedreht werden, wobei sich die Seilabschnitte I und II verkürzen und in gleichem Ausmaß die Seilabschnitte VIII und IX verlängern. In gleicher Weise verkürzen sich auch die Seilabschnitte III und IV und die Seilabschnitte X und XI werden verlängert. Die Rotation der jeweils übereinanderliegenden Heave-Scheiben 18.1 und 18.2 sowie 19.1 und 19.2 erfolgt jeweils gegenläufig.

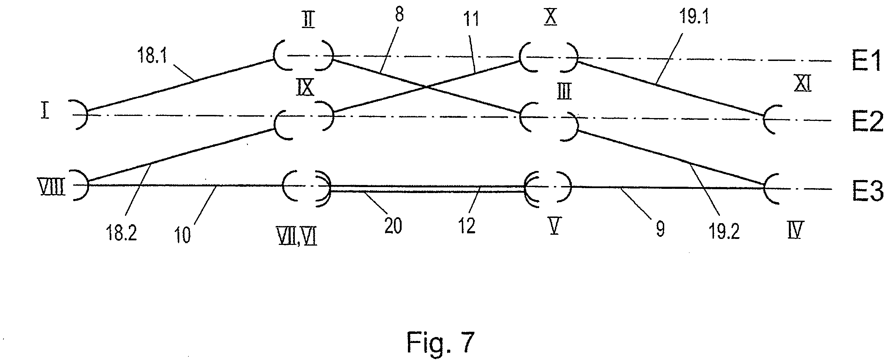

Die Figur 7 zeigt, dass die Seilabschnitte in verschiedenen Ebenen geführt sind, nämlich in den drei Ebenen E1, E2 und E3. Diese Aufteilung in verschiedene Ebenen ist notwendig, damit sich die Seilführungen nicht gegenseitig behindern. Zum Wechseln der Ebenen sind die Heave-Scheibenanordnungen 18, 19 und zwei der Umlenkscheiben 8,11 schräg gestellt.

Die Seilabschnitte II und X sind in der obersten Ebene E1, die Seilabschnitte I, IX, III, XI in der mittleren Ebene E2 und die Seilabschnitte VIII, VII/VI, V und IV in der untersten Ebene E3 angeordnet, wobei die Seilabschnitte I und XI in den Befestigungspunkten P1 und P2 enden.

In Fig.4 und Fig.6 sind weiters die am Heave-Schlitten angreifenden Seilabschnitte (XII) eingezeichnet.

Nachfolgend wird die zuvor beschriebene Erfindung hinsichtlich ihrer Wirkungsweise näher erläutert. Wie eingangs erwähnt, dient der Simulator der Simulation von bewegten Systemen, wie beispielsweise Fahrzeugen, Schiffen, Flugzeugen oder Ähnlichem. Dabei wird dem Benutzer, der sich in der Kabine 5 befindet, über eine Vielzahl an künstlich erzeugten Sinneswahrnehmungen eine virtuelle Realität vorgespiegelt, wobei dieser, wie weiter unten ausgeführt wird, auch aktiv Einfluss nehmen kann. Diese Sinnesreize sind einerseits audiovisuelle Reize, die über Bildwiedergabesysteme sowie Tonwiedergabesysteme dem Benutzer zugeführt werden. Auf der anderen Seite werden von der erfindungsgemäßen Vorrichtung Beschleunigungen bzw. Kräfte erzeugt, die auf den Benutzer wirken. Durch die Kombination aus audiovisuellen und physikalischen Sinneseindrücken interpretiert das menschliche Gehirn virtuelle Bewegungszustände. Diese Interpretation wirkt für den Benutzer umso realistischer, je exakter die Sinneswahrnehmungen den realen Sinneswahrnehmungen solcher Situationen gleichen. Aus diesem Grund ist es von großer Bedeutung, diese Signale so realitätsnah wie möglich dem Benutzer zuzuführen.
Des Weiteren ist bei dem vorliegenden Bewegungs- und Orientierungssimulator ein Bedienelement vorgesehen, über das der Benutzer die Bewegungen des bewegten Systems in der virtuellen Welt steuern kann.

Dieses Steuersignal des Benutzers und etwaige Umwelteinflüsse (z.B. Wind, Fahrbahn), die auch als Störgrößen bezeichnet werden können, werden einem physikalischen Simulationsmodell zugeführt. Dieses entspricht einer mathematischen Abbildung des realen Verhaltens des simulierten Objekts. Es beinhaltet Größen wie Massenträgheiten, Widerstände etc. Mit Hilfe dieses Modells werden die Beschleunigungen bzw. Kräfte und deren Orientierungen berechnet, die dem Benutzer in der virtuellen Welt zugeführt werden sollen.

Diese Beschleunigungen werden von dem erfindungsgemäßen Bewegungs- und Orientierungssimulator auf unterschiedliche Arten erzeugt.

Beschleunigung durch Drehung des Schlittenkorbs:
Dabei dreht sich der Schlittenkorb 2 um seine Drehachse, wobei er beidseitig über diese Drehachse hinausragt. Auf dem Schlittenkorb ist linear verschiebbar der Heave-Schlitten 3 angeordnet. Befindet sich dieser Heave-Schlitten 3 genau über der Drehachse des rotierenden Schlittenkorbs, so wirken auf den Benutzer keinerlei Beschleunigungen. Obwohl sich der Benutzer um seine Körperachse dreht, empfindet er diesen Zustand als unbewegten Zustand, da ihm in der abgeschlossenen Kabine 5 die visuellen Reize der Drehung fehlen.
Entfernt sich nun der Heave-Schlitten von der Drehachse, so steigt mit dem Abstand zur Drehachse primär die Radialbeschleunigung. Die resultierende Beschleunigung aus Erdbeschleunigung und der Radialbeschleunigung wird von dem Benutzer wahrgenommen. Bewegt sich der Heave-Schlitten wieder zurück und überquert er die Drehachse des Schlittenkorbs so erfährt der Benutzer einen Wechsel der Orientierung der Radialbeschleunigung. Ein Pendeln des Heave-Schlittens um die Drehachse entspricht beispielsweise den Beschleunigungen einer Slalomfahrt mit einem PKW.

Um diese resultierende Beschleunigung in ihrer Größe zu variieren, kann entweder die Winkelgeschwindigkeit des Schlittenkorbs variiert werden oder der Heave-Schlitten variabel weiter nach außen verfahren werden.

### Beschleunigung durch Linearantriebe:

Die lineare Geschwindigkeitsänderung des Heave-Schlittens 3 entlang des Schlittenkorbs 2 durch den erfindungsgemäßen Seilantrieb 6 sowie die lineare Geschwindigkeitsänderung 4 der Kardanaufhängung durch den Vertikallift 15 sind weitere Möglichkeiten, um Beschleunigungen auf den Benutzer auszuüben.

### Änderung der Richtung der Beschleunigung:

Um die Richtung der resultierenden, auf den Körper wirkenden Beschleunigung zu verändern, ist es von Nöten, den Körper selbst zu bewegen, um damit den Eindruck einer Änderung der Beschleunigungsrichtung hervorzurufen. Dies geschieht mit Hilfe der kardanischen Aufhängung 4 der Kabine 5. Diese kardanische Aufhängung umfasst zwei Kardanbögen, nämlich einen Yaw-Ring 13 und einen Roll-Ring 14, deren Stellung zueinander beliebig einstellbar und verdrehbar ist. Über diese insgesamt drei Drehfreiheitsgrade kann nun die Kabine 5 und damit der Körper des Benutzers beliebig gedreht werden. Zusätzlich ist die gesamte kardanische Aufhängung an einem Vertikallift 15 drehbar angeordnet.

Über diese Vielzahl an Freiheitsgraden sowie Beschleunigungsmöglichkeiten können dem Körper auf unterschiedlichste Weise Bewegungsabläufe vorgespiegelt werden. Diese Flexibilität ist ein großer Vorteil der vorliegenden Erfindung.

Zur Bewegung der Komponenten des Bewegungs- und Orientierungssimulators sind eine Reihe von Antrieben vorgesehen. Die Stellgrößen für diese Antriebe werden entweder aus dem physikalischen Simulationsmodell berechnet oder können manuell von einer Steuerzentrale vorgegeben werden. Die Erzeugung der audiovisuellen Reize kann ebenfalls entweder aus einem physikalischen Simulationsmodell hervorgehen oder einem fixen Ablauf folgen.

### Definition der Bewegungsachsen der bevorzugten Ausführungsform:

Die Drehachse des Schlittenkorbs verläuft lotrecht.

Die Bewegung des Heave-Schlittens 3 im Schlittenkorb 2 erfolgt entlang einer Geraden, wobei die Gerade orthogonal zu der Drehachse des Schlittenkorbs 2 verläuft und mit ihr einen gemeinsamen Schnittpunkt hat.

Die Bewegungsrichtung des Vertikallifts ist wiederum normal auf die Bewegungsgerade des Heave-Schlittens und somit parallel zu der Rotationsachse des Schlittenkorbs 2.

Die Drehachse der Kardanaufhängung 4 bezogen auf den Vertikallift 15 verläuft tangential auf die Kreisbahn des Schlittenkorbes und somit waagerecht und normal auf die Bewegungsrichtung des Vertikallifts 15.

Die Drehachse die im Yaw-Ring 13 vorgesehen ist verläuft normal auf die Drehachse der Kardanaufhängung im Vertikallift und die Rotationsachse der Kabine im Roll-Ring verläuft wiederum orthogonal zur Drehachse im Yaw-Ring 13.

Die Drehachsen des Yaw-Rings 13, des Roll-Rings 14 und der Aufhängung im Vertikallift haben also zu jedem Zeitpunkt einen Gemeinsamen Schnittpunkt.

In dieser bevorzugten Ausführungsform sind alle obengenannten Freiheitsgrade mit unabhängig voneinander arbeitenden Antrieben versehen und abgesehen von den Linearantrieben unbegrenzt bewegbar, also beliebig weit drehbar.

## Patentansprüche

1. Bewegungs- und Orientierungssimulator mit einer kardanischen Aufhängung (4) für eine Kabine (5), die in einem Heave-Schlitten (3) angeordnet ist, der in einem Schlittenkorb (2) linear bewegbar ist, wobei der Schlittenkorb (2) drehbar ist und wobei zur Linearbewegung des Heave-Schlittens (3) im Schlittenkorb (2) ein Seilantrieb (6) vorgesehen ist, **dadurch gekennzeichnet,**
- **dass** der Simulator auf einem bodenfesten Fundament (1) angeordnet ist, das in sich eine Antriebseinheit (23) beherbergt, wobei die Antriebseinheit (23) den Schlittenkorb (2) in Drehung versetzen kann, und wobei die Antriebseinheit (23) Motoren (24) umfasst,
- **dass** der Seilantrieb (6) ein am Schlittenkorb (2) befestigtes stehendes Seil (7) aufweist, dass der Seilantrieb (6) um eine am Schlittenkorb (2) gelagerte vordere (8, 9) und hintere (10, 11) Umlenkscheibenanordnung, um eine am Heave-Schlitten gelagerte Heave-Scheibenanordnung (18, 19) sowie um eine Seilantriebsscheibe (12) geführt ist, wobei der Seilantrieb (6) Motoren (28) umfasst,
- **dass** zum Antrieb der Seilantriebsscheibe (12) die Motoren (28) und Kupplungselemente zur Übertagung der Kräfte vorgesehen sind,
- und **dass** die Motoren (24) zum Antrieb des Schlittenkorbes (2) und die Motoren (28) zur Bewegung des Heave-Schlittens (3) in Bezug zum Fundament (1) ortsfest angeordnet sind.

2. Simulator nach Anspruch 1, **dadurch gekennzeichnet, dass** am Heave-Schlitten (3) drehbare Heave-Scheibenanordnungen (18, 19) zur Verschiebung des Heave-Schlittens (3) vorgesehen sind.

3. Simulator nach Anspruch 2, **dadurch gekennzeichnet, dass** der Seilantrieb (6) am Heave-Schlitten (3) angreifende Seilabschnitte (XII) aufweist, über die Verschiebekräfte auf den Heave-Schlitten (3) übertragbar sind, wobei die Seilabschnitte (XII) in bevorzugter Weise als, um die Heave-Scheibenanordnungen (18, 19) gelegte Seilschlingen ausgeführt sind.

4. Simulator nach Anspruch 3, **dadurch gekennzeichnet, dass** die am Heave-Schlitten (3) angreifenden Seilabschnitte (XII) paarweise gegeneinander wirkend angeordnet sind.

5. Simulator nach Anspruch 4, **dadurch gekennzeichnet, dass** die zur Verschiebung des Heave-Schlittens (3) gegeneinander wirkendenden Paare von Seilabschnitten über eine Spannanordnung gegeneinander vorgespannt sind.

6. Simulator nach einem der Ansprüche 4 oder 5, **dadurch gekennzeichnet, dass** die Summe der Abstände zwischen den paarweise am Heave-Schlitten (3) angreifenden Seilabschnitten (XII) und den zugehörigen, in Seilrichtung am nächsten liegenden Umlenkscheiben (8, 9 bzw. 10, 11) bei einer Verschiebung des Heave-Schlittens (3) konstant ist.

7. Simulator nach einem der Ansprüche 1 bis 6, **dadurch gekennzeichnet, dass** der Schlittenkorb (2) drehbar gelagert ist und beidseitig der Drehachse auskragt und dass der Heave-Schlitten (3) auf beide Seiten der Drehachse des auskragenden Schlittenkorbes (2) bewegbar ist.

8. Simulator nach einem der Ansprüche 1 bis 7, **dadurch gekennzeichnet, dass** der Seilantrieb (6) Seile (7) aufweist die mit einer Spannanordnung auf Zug gehalten sind.

9. Simulator nach einem der Ansprüche 1 bis 8, **dadurch gekennzeichnet, dass** zum Antrieb der Drehung des Schlittenkorbs (2) Motoren (24) und Kupplungselemente zur Übertagung der Kräfte vorgesehen sind, wobei die Kupplungselemente bevorzugt als Reibringe (25) ausgeführt sind.

10. Simulator nach einem der Ansprüche 1 bis 9, **dadurch gekennzeichnet, dass** die Kupplungselemente zur Übertagung der Kräfte zum Antrieb der Seilantriebsscheibe (12) als Reibringe (30) ausgeführt sind.

11. Simulator nach einem der Ansprüche 1 bis 10, **dadurch gekennzeichnet, dass** das Seil (7) zusätzlich noch um eine am Schlittenkorb (2) angeordnete Spannscheibe (20) geführt ist.

12. Simulator nach einem der Ansprüche 1 bis 11, **dadurch gekennzeichnet, dass** die vordere (8, 9) und hintere (10, 11) Umlenkscheibenanordnung je zwei Umlenkscheiben umfassen.

13. Simulator nach einem der Ansprüche 2 bis 12, **dadurch gekennzeichnet, dass** die Heave-Scheibenanordnung (18, 19) vier Heave-Scheiben aufweist, die voneinander unabhängig am Schlitten (3) drehbar angeordnet sind.

14. Simulator nach einem der Ansprüche 2 bis 13, **dadurch gekennzeichnet, dass** je zwei Heave-Scheiben an einem Heave-Bolzen (22) gelagert sind.

15. Simulator nach einem der Ansprüche 3 bis 14, **dadurch gekennzeichnet, dass** die beiden von der Seilantriebsscheibe (12) abgehenden Seilabschnitte über eine vordere (8, 9) und eine hintere (10, 11) Umlenkscheibe und von dort auf je eine der Heave-Scheiben geführt sind.

16. Simulator nach einem der Ansprüche 11 bis 15, **dadurch gekennzeichnet, dass** die Spannscheibe (20) eine fünfte Umlenkscheibe bildet.

17. Simulator nach einem der Ansprüche 1 bis 8, **dadurch gekennzeichnet, dass** der eine Befestigungspunkt des Endes des Seiles (7) am vorderen Ende und der andere Befestigungspunkt am hinteren Ende des Schlittenkorbes (2) angeordnet ist.

18. Simulator nach einem der Ansprüche 1 bis 17, **dadurch gekennzeichnet, dass** der Schlittenkorb (2) als drehbar gelagerter, zweiseitiger Zentrifugenarm ausgebildet und durch eine Antriebseinheit (23) in Drehung versetzbar ist.

19. Simulator nach einem der Ansprüche 1 bis 18, **dadurch gekennzeichnet, dass** die am Schlitten (3) angeordnete kardanische Aufhängung (4) mit der darin aufgehängten Kabine (5) durch einen Vertikallift (15) vertikal bewegbar ist.

20. Simulator nach einem der Ansprüche 11 bis 19, **dadurch gekennzeichnet, dass** die Längen des von der Umlenkscheibe (9) zur Seilantriebsscheibe (12) reichenden Seilabschnittes V und des von der Seilantriebsscheibe (12) zur Spannscheibe (20) reichenden Seilabschnittes VI und von der Spannscheibe (20) zur Umlenkscheibe (10) reichenden Seilabschnittes VII unveränderlich vorgesehen sind.

21. Simulator nach Anspruch 20, **dadurch gekennzeichnet, dass** bei einer Drehung der Antriebsscheibe (12) die Seilabschnitte I, II, III und IV je nach Drehrichtung eine Verkürzung oder Verlängerung und die Seilabschnitte VIII, IX, X und XI eine Verlängerung oder Verkürzung erfahren, wodurch die lineare Verschiebung des Heave-Schlittens (3) erfolgt.

22. Simulator nach einem der Ansprüche 20 oder 21, **dadurch gekennzeichnet, dass** die Seilabschnitte I bis XI in drei übereinander angeordneten Ebenen E1 bis E 3 angeordnet sind, wobei zum Wechseln der Ebene die Heave-Scheibenanordnungen (18, 19) und zwei der Umlenkscheiben (8, 11) schräggestellt sind.

23. Simulator nach Anspruch 22, **dadurch gekennzeichnet, dass** die Seilabschnitte II und X in der obersten Ebene E1, die Seilabschnitte I, IX, III, XI in der mittleren Ebene E2 und die Seilabschnitte VIII, VII/VI, V und IV in der untersten Ebene E3 angeordnet sind, wobei die Seilabschnitte I und XI in den Befestigungspunkten P1 und P2 enden.

24. Simulator nach einem der Ansprüche 13 bis 23, **dadurch gekennzeichnet, dass** bei Drehung der Antriebsscheibe (12) die Heave-Scheiben (18.1) und (19.2) eine Drehung in die entgegengesetzte Richtung zu den, der Richtung der Antriebsscheibe (12) folgenden, Heave-Scheiben (18.2) und (19.1) aufweisen.

## Claims

1. A motion and orientation simulator, comprising a gimbal-mounted suspension (4) for a cabin (5), which is arranged in a heave carriage (3), which can be moved linearly in a carriage cage (2), wherein the carriage cage (2) is rotatable and wherein a cable drive (6) is provided for the linear movement of the heave carriage (3) in the carriage cage (2), **characterised in that**
- the simulator is arranged on a foundation (1) fixed to the ground, which accommodates a drive unit (23), wherein the drive unit (23) can cause the carriage cage (2) to rotate, and wherein the drive unit (23) comprises motors (24),
- that the cable drive (6) comprises a vertical cable (7) fastened to the carriage cage (2), that the cable drive (6) is passed around a front (8, 9) and rear (10, 11) deflection pulley arrangement mounted on the carriage cage (2), around a heave-pulley arrangement (18, 19) mounted on the heave carriage and around a cable drive pulley (12), wherein the cable drive (6) comprises motors (28),
- that the motors (28) and coupling elements for the transmission of forces are provided for driving the cable drive pulley (12),
- and that the motors (24) for driving the carriage cage (2) and the motors (28) for moving the heave carriage (3) are arranged stationary with respect to the foundation (1).

2. The simulator according to claim 1, **characterised in that** rotatable heave-pulley arrangements (18, 19) for displacing the heave carriage (3) are provided on the heave carriage (3).

3. The simulator according to claim 2, **characterised in that** the cable drive (6) comprises cable sections (XII) engaging with the heave carriage (3), via which cable sections displacement forces can be transmitted to the heave carriage (3), wherein the cable sections (XII) are constituted in a known manner as cable slings placed around the heave pulley arrangements (18, 19) .

4. The simulator according to claim 3, **characterised in that** the cable sections (XII) engaging with the heave carriage (3) are arranged in pairs acting against one another.

5. The simulator according to claim 4, **characterised in that** the pairs of cable sections acting against one another to displace the heave carriage (3) are pretensioned against one another by means of a tensioning arrangement.

6. The simulator according to any one of claims 4 or 5, **characterised in that** the sum of the distances between the cable sections (XII) engaging in pairs with the heave carriage (3) and the associated deflection pulleys (8, 9 and respectively 10, 11) lying closest in the cable direction is constant during a displacement of the heave carriage (3).

7. The simulator according to any one of claims 1 to 6, **characterised in that** the carriage cage (2) is mounted rotatably and overhangs on both sides of the rotary axis and that the heave carriage (3) can be moved on both sides of the rotary axis of the overhanging carriage cage (2).

8. The simulator according to any one of claims 1 to 7, **characterised in that** the cable drive (6) comprises cables (7), which are held under traction by a tensioning arrangement.

9. The simulator according to any one of claims 1 to 8, **characterised in that** motors (24) and coupling elements for the transmission of forces are provided for driving the rotation of the carriage cage (2), wherein the coupling elements are preferably constituted as friction rings (25).

10. The simulator according to any one of claims 1 to 9, **characterised in that** the coupling elements for the transmission of forces for driving the cable drive pulley (12) are constituted as friction rings (30).

11. The simulator according to any one of claims 1 to 10, **characterised in that** the cable (7) is also passed around a tensioning disc (20) arranged on the carriage cage (2).

12. The simulator according to any one of claims 1 to 11, **characterised in that** the front (8, 9) and rear (10, 11) deflection pulley arrangement comprise two deflection pulleys each.

13. The simulator according to any one of claims 2 to 12, **characterised in that** the heave pulley arrangement (18, 19) comprises four heave pulleys, which are arranged rotatably on the carriage (3) independently of one another.

14. The simulator according to any one of claims 2 to 13, **characterised in that** two heave pulleys are mounted in each case on a heave bolt (22).

15. The simulator according to any one of claims 3 to 14, **characterised in that** the two cable sections proceeding from the cable drive pulley (12) are passed over a front (8, 9) and a rear (10, 11) deflection pulley and from there in each case onto one of the heave pulleys.

16. The simulator according to any one of claims 11 to 15, **characterised in that** the tensioning disc (20) forms a fifth deflection pulley.

17. The simulator according to any one of claims 1 to 8, **characterised in that** the one fastening point of the end of the cable (7) is arranged at the front end and the other fastening point is arranged at the rear end of the carriage cage (2).

18. The simulator according to any one of claims 1 to 17, **characterised in that** the carriage cage (2) is constituted as a rotatably mounted, two-sided centrifuge arm and can be caused to rotate by means of a drive unit (23).

19. The simulator according to any one of claims 1 to 18, **characterised in that** the gimbal-mounted suspension (4) arranged on the carriage (3) with the cabin (5) suspended therein is vertically movable by means of a vertical lift (15).

20. The simulator according to any one of claims 11 to 19, **characterised in that** the lengths of cable section V extending from the deflection pulley (9) to the cable drive pulley (12) and of cable section VI extending from cable drive pulley (12) to tensioning disc (20) and of cable section VII extending from the tensioning disc (20) to the deflection pulley (10) are provided unchangeable.

21. The simulator according to claim 20, **characterised in that**, when there is a rotation of the drive pulley (12), cable sections I, II, III and IV experience a shortening or lengthening depending on the direction of rotation and cable sections VIII, IX, X, XI experience a lengthening or shortening, as a result of which the linear displacement of the heave carriage (3) takes place.

22. The simulator according to any one of claims 20 or 21, **characterised in that** cable sections I to XI are arranged in three planes E1 to E3 arranged one above the other, wherein, to change the plane, the heave pulley arrangements (18, 19) and two of the deflection pulleys (8, 11) are positioned inclined.

23. The simulator according to claim 22, **characterised in that** cable sections II and X are arranged in uppermost plane E1, cable sections I, IX, III and XI in middle plane E2 and cable sections VIII, VII/VI,V and IV in lowest plane E3, wherein cable sections I and XI end in fastening points P1 and P2.

24. The simulator according to any one of claims 13 to 23, **characterised in that**, when drive pulley (12) is rotated, the heave pulleys (18.1) and (19.2) display a rotation in the opposite direction to the heave pulleys (18.2) and (19.1) following the direction of the drive pulley (12).

## Revendications

1. Simulateur de déplacement et d'orientation, pourvu d'une suspension par cardan (4), destiné à une cabine (5), qui est placée dans un chariot de soulèvement (3) qui est déplaçable de manière linéaire dans une nacelle de chariot (2), la nacelle de chariot (2) étant rotative et pour le déplacement linéaire du chariot de soulèvement (3) dans la nacelle de chariot (2) étant prévu un entraînement par câble (6), **caractérisé**
- **en ce que** le simulateur est placé sur des fondations (1) solidaires du sol, qui abrite en soi une unité d'entraînement (23), l'unité d'entraînement (23) étant apte à amener en rotation la nacelle de chariot (2) et l'unité d'entraînement (23) comprenant des moteurs (24),
- **en ce que** l'entraînement par câble (6) comporte un câble vertical (7), fixé sur la nacelle de chariot (2), en ce que l'entraînement par câble (6) est guidé autour d'un agencement avant (8, 9) et arrière (10, 11) de poulies de renvoi logé sur la nacelle de chariot (2), autour d'un agencement de poulies de soulèvement (18, 19) logé sur le chariot de soulèvement, ainsi qu'autour d'une poulie d'entraînement de câble (12), l'entraînement par câble (6) comprenant des moteurs (28),
- **en ce que** pour entraîner la poulie d'entraînement de câble (12) sont prévus les moteurs (28) et des éléments d'accouplement, destinés à transférer les forces,
- et **en ce que** les moteurs (24) destinés à entraîner la nacelle de chariot (2) et les moteurs (28) destinés à déplacer le chariot de soulèvement (3) sont placés de manière stationnaire par rapport aux fondations (1).

2. Simulateur selon la revendication 1, **caractérisé en ce que** sur le chariot de soulèvement (3) sont prévus des agencements de poulies de soulèvement (18, 19) rotatives, destinées à déplacer le chariot de soulèvement (3).

3. Simulateur selon la revendication 2, **caractérisé en ce que** l'entraînement par câble (6) comporte des tronçons de câble (XII) qui s'engagent sur le chariot de soulèvement (3), par l'intermédiaire desquels des forces de déplacement sont transférables sur le chariot de soulèvement (3), de manière préférentielle, les tronçons de câble (XII) étant réalisés sous la forme d'élingues posées autour des agencements de poulies de soulèvement (18, 19).

4. Simulateur selon la revendication 3, **caractérisé en ce que** les tronçons de câble (XII) qui s'engagent sur le chariot de soulèvement (3) sont placés de manière à agir l'un contre l'autre par paires.

5. Simulateur selon la revendication 4, **caractérisé en ce que** les paires de tronçons de câble agissant l'une contre l'autre pour déplacer le chariot de soulèvement (3) sont précontraints les unes contre les autres par l'intermédiaire d'un agencement de serrage.

6. Simulateur selon l'une quelconque des revendications 4 ou 5, **caractérisé en ce que** la somme des écarts entre les tronçons de câble (XII) s'engageant par paires sur le chariot de soulèvement (3) et les poulies de renvoi (8, 9 ou 10, 11) associées les plus proches dans la direction du câble est constante lors d'un déplacement du chariot de soulèvement (3).

7. Simulateur selon l'une quelconque des revendications 1 à 6, **caractérisé en ce que** la nacelle de chariot (2) est logée en étant rotative et déborde de part et d'autre de l'axe de rotation et **en ce que** le chariot de soulèvement (3) est déplaçable sur les deux côtés de l'axe de rotation de la nacelle de chariot (2) débordante.

8. Simulateur selon l'une quelconque des revendications 1 à 7, **caractérisé en ce que** l'entraînement par câble (6) comporte des câbles (7) qui sont maintenus en traction à l'aide d'un agencement de serrage.

9. Simulateur selon l'une quelconque des revendications 1 à 8, **caractérisé en ce que** pour l'entraînement en rotation de la nacelle de chariot (2) sont prévus des moteurs (24) et des éléments d'accouplement destinés à transférer les forces, les éléments d'accouplement étant réalisés de préférence sous la forme de bagues de friction (25).

10. Simulateur selon l'une quelconque des revendications 1 à 9, **caractérisé en ce que** les éléments d'accouplement destinés à transférer les forces destinées à entraîner la poulie d'entraînement de câble (12) sont réalisés sous la forme de bagues de friction (30).

11. Simulateur selon l'une quelconque des revendications 1 à 10, **caractérisé en ce que** le câble (7) est encore guidé en supplément autour d'une poulie de serrage (20) placée sur la nacelle de chariot (2).

12. Simulateur selon l'une quelconque des revendications 1 à 11, **caractérisée en ce que** les agencements avant (8, 9) et arrière (10, 11) de poulies de renvoi comprennent chacun deux poulies de renvoi.

13. Simulateur selon l'une quelconque des revendications 2 à 12, **caractérisé en ce que** l'agencement de poulies de soulèvement (18, 19) comporte quatre poulies de soulèvement, qui sont placées sur le chariot (3) en étant rotatives indépendamment les unes des autres.

14. Simulateur selon l'une quelconque des revendications 2 à 13, **caractérisé en ce que** chaque fois deux poulies de soulèvement sont logées sur un boulon de soulèvement (22).

15. Simulateur selon l'une quelconque des revendications 3 à 14, **caractérisé en ce que** les deux tronçons de câble qui partent de la poulie d'entraînement de câble (12) sont guidés par l'intermédiaire d'une poulie de renvoi avant (8, 9) et arrière (10, 11) et de là sur chaque fois l'une des poulies de soulèvement.

16. Simulateur selon l'une quelconque des revendications 11 à 15, **caractérisé en ce que** la poulie de serrage (20) forme une cinquième poulie de renvoi.

17. Simulateur selon l'une quelconque des revendications 1 à 8, **caractérisé en ce que** l'un des points de fixation de l'extrémité du câble (7) est placé sur l'extrémité avant et l'autre point de fixation est fixé sur l'extrémité arrière de la nacelle de chariot (2).

18. Simulateur selon l'une quelconque des revendications 1 à 17, **caractérisé en ce que** la nacelle de chariot (2) est réalisée sous la forme d'un bras de centrifugeuse bilatéral, logé en rotation et est susceptible d'être amenée en rotation par une unité d'entraînement (23).

19. Simulateur selon l'une quelconque des revendications 1 à 18, **caractérisé en ce que** la suspension à cardan (4) placée sur le chariot (3) est déplaçable à la verticale avec la cabine (5) qui y est accrochée par un ascenseur vertical (15).

20. Simulateur selon l'une quelconque des revendications 11 à 19, **caractérisé en ce que** les longueurs du tronçon de câble V allant de la poulie de renvoi (9) vers la poulie d'entraînement de câble (12) et du tronçon de câble VI allant de la poulie d'entraînement de câble (12) vers la poulie de serrage (20) et du tronçon de câble VII allant de la poulie de serrage (20) vers la poulie de renvoi (10) sont prévues en étant invariables.

21. Simulateur selon la revendication 20, **caractérisé en ce que** lors d'une rotation de la poulie d'entraînement (12), les tronçons de câble I, II, II et V subissent en fonction du sens de rotation un raccourcissement ou un rallongement et les tronçons de câble VIII, IX, X et XI subissent un rallongement ou un raccourcissement, ce qui donne lieu au déplacement linéaire du chariot de soulèvement (3).

22. Simulateur selon l'une quelconque des revendications 20 ou 21, **caractérisé en ce que** les tronçons de câble I à XI sont placés dans trois plans superposés E1 à E3, pour changer de plan, l'agencement de poulies de soulèvement (18, 19) et deux des poulies de renvoi (8, 11) étant placés en oblique.

23. Simulateur selon la revendication 22, **caractérisé en ce que** les tronçons de câble II et X sont placés dans le plan supérieur E1, les tronçons de câble I, IX, III, XI sont placés dans le plan inférieur E3, les tronçons de câble I et XI se terminant dans les points de fixation P1 et P2.

24. Simulateur selon l'une quelconque des revendications 13 à 23, **caractérisé en ce que** lors d'une rotation de la poulie d'entraînement (12), les poulies de soulèvement (18.1) et (19.2) effectuent une rotation dans la direction opposée vers les poulies de soulèvement (18.2) et (19.1) suivant la direction de la poulie d'entraînement (12).
